# EUROPEAN PATENT APPLICATION

(11) **EP 4 539 158 A2**
(43) Date of publication of application: **16.04.2025**
(21) Application number: 24198935.9
(22) Date of filing: 06.09.2024
(51) Int. Cl.: H01M 4/36, H01M 4/38, H01M 4/587, H01M 4/62, H01M 4/66, H01M 10/0525, H01M 10/0562, H01M 4/133, H01M 4/02

(54) **LITHIUM METAL BATTERY, AND METHOD OF MANUFACTURING LITHIUM METAL BATTERY**

(30) Priority: 20.09.2023 KR 20230125844
(71) Applicant: SAMSUNG SDI CO., LTD., Yongin-si, Gyeonggi-do 17084 (KR)
(72) Inventor: Kim, Heemin, 17084 Yongin-si, Gyeonggi-do (KR); Shin, Juhun, 17084 Yongin-si, Gyeonggi-do (KR); Pyo, Sujin, 17084 Yongin-si, Gyeonggi-do (KR); Lee, Kanghee, 17084 Yongin-si, Gyeonggi-do (KR); Bae, Woojin, 17084 Yongin-si, Gyeonggi-do (KR); Moon, Jongseok, 17084 Yongin-si, Gyeonggi-do (KR); Park, Jinhwan, 17084 Yongin-si, Gyeonggi-do (KR); Woo, Hyunsik, 17084 Yongin-si, Gyeonggi-do (KR); Park, Jongseok, 17084 Yongin-si, Gyeonggi-do (KR); Hong, Donggi, 17084 Yongin-si, Gyeonggi-do (KR)
(74) Representative: Michalski Hüttermann & Partner Patentanwälte mbB

(57) **Abstract**

A lithium metal battery and a method of manufacturing the same are described herein. The lithium metal battery includes a cathode, an anode, and an electrolyte layer between the cathode and the anode, wherein the anode includes an anode current collector and an electrodeposition inducing layer on the anode current collector, and the electrodeposition inducing layer includes chromium (Cr).

## Description

### CROSS-REFERENCE TO RELATED APPLICATION

The present application claims priority to and the benefit of Korean Patent Application No. 10-2023-0125844, filed on September 20, 2023, in the Korean Intellectual Property Office, the entire content of which is incorporated herein by reference.

### BACKGROUND

### 1. Field

Embodiments of the present disclosure described herein are related to lithium metal batteries and methods of manufacturing lithium metal batteries.

### 2. Description of the Related Art

Current commercially available lithium batteries mainly utilize anode active materials such as graphite. Carbon-based anode active materials should not substantially change in volume during charging and discharging, and thus the stability of lithium batteries is relatively high. However, the theoretical electric capacity of graphite is as small as about 372 mAh/g.

Lithium metal may be utilized as an anode active material. Lithium metal has a very large theoretical electric capacity of about 3860 mAh/g. During charging and discharging, dendrites are formed on the surface of lithium metal by side reactions with an electrolyte, and the growth of dendrites can cause a short circuit between cathodes and anodes. As a result, the lifespan characteristics of lithium metal batteries including the lithium metal may be relatively low or may deteriorate.

A method of improving the lifespan characteristics of lithium metal batteries including lithium metal may be desired or required.

### SUMMARY

Aspects according to one or more embodiments are directed to a lithium metal battery having a new structure.

Aspects according to one or more embodiments are directed to a method of manufacturing lithium metal batteries having a new structure.

Additional aspects will be set forth in part in the description which follows and, in part, will be apparent from the description, or may be learned by practice of the presented embodiments of the present disclosure.

According to one or more embodiments, a lithium metal battery includes:
a cathode, an anode, and an electrolyte layer disposed between the cathode and the anode,
the anode includes
an anode current collector and
an electrodeposition inducing layer disposed on the anode current collector, wherein
the electrodeposition inducing layer includes chromium (Cr).
According to one or more embodiments, a method of manufacturing a lithium metal battery includes:
applying or providing an anode current collector, and
applying or providing an anode by applying or providing an electrodeposition inducing layer on the anode current collector, and
applying or providing a cathode on the anode and applying or providing an electrolyte layer between the anode and the cathode, wherein
the electrodeposition inducing layer includes chromium (Cr).

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 shows a cross-sectional view of an anode according to example embodiments;
FIG. 2 shows a cross-sectional view of an anode according to example embodiments;
FIG. 3 is a cross-sectional view of an anode according to example embodiments;
FIG. 4 is a cross-sectional view of an anode according to example embodiments;
FIG. 5 is a schematic view of a lithium metal battery according to example embodiments;
FIG. 6 is a schematic view of a lithium metal battery according to example embodiments;
FIG. 7 is a schematic view of a lithium metal battery according to example embodiments;
FIG. 8 is a cross-sectional view of a lithium metal battery including a solid electrolyte layer, according to example embodiments;
FIG. 9 is a cross-sectional view of a lithium metal battery including a solid electrolyte layer, according to example embodiments;
FIG. 10 is a graph showing the 1^{st} charging curve for lithium metal batteries manufactured in Example 1 and Comparative Example 1;
FIG. 11 is a scanning electron microscope image of a cross section of an anode of Example 1 after the 1^{st} charge;
FIG. 12 is a scanning electron microscope image of a cross section of an anode of Comparative Example 1 after the 1^{st} charge; and
FIG. 13 is a graph of capacity retention ratios for lithium metal batteries manufactured in Example 1, Example 2, Comparative Example 1, Comparative Example 2, and Comparative Example 3.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described herein, by referring to the drawings, to explain aspects of the present description. As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

During the charging and discharging process of a lithium metal battery utilizing lithium metal as an anode active material, a metal layer including lithium is precipitated and dissolved between an anode current collector and an electrolyte layer. As charging and discharging of a lithium metal battery is repeated, the lithium-including metal layer includes impurities remaining in an electrode and decomposition products of the electrolyte. Therefore, the inclusion of these impurities makes the surface of the lithium-including metal layer rough and hard. Lithium dendrites are precipitated on the lithium-including metal layer having such a rough surface. These lithium dendrites continue to grow during the charging and discharging process and can cause a short circuit between a cathode and an anode.

A lithium metal battery according to one aspect has a new structure, so that the formation of lithium dendrites on the anode current collector or the anode active material layer is suppressed or reduced, and due to the suppression of short-circuit occurrence in the lithium metal battery through the electrodeposition of substantially uniform lithium metal, the cycling characteristics of the lithium metal battery are consequently improved.

The present disclosure described herein can be subjected to one or more suitable transformations and can have one or more suitable embodiments. Accordingly, specific embodiments are illustrated in the drawings and described in more detail in the detailed description. However, this is not intended to limit the present disclosure to a specific embodiment, and should be understood to include all transformations, equivalents, or substitutes included in the technical scope of the present disclosure.

The terms utilized are only utilized to describe specific embodiments and are not intended to limit the creative idea. Singular expressions include plural expressions unless the context clearly dictates otherwise. It will be further understood that the terms "include" and/or "have" utilized in this specification are intended to indicate the presence of the features, numbers, steps, actions, components, parts, elements, materials, or combinations thereof recited in the specification and shall not to be understood as precluding the possibility of the presence or addition of one or more other features, numbers, steps, actions, components, parts, elements, materials, or combinations thereof. The sign "/" utilized herein may be interpreted as "and," or as "or" depending on the context.

Thicknesses have been scaled up or down to clearly represent different layers and areas in the drawings. Like reference numbers may refer to like elements throughout, and duplicative descriptions thereof may not be provided the drawings and the following description. Throughout the specification, if (e.g., when) a part, such as a layer, membrane, region, plate, etc. is said to be "on" or "above" another part, this includes not only the case where it is directly on another part, but also the case where there is another part in between. Although the terms "first," "second," etc. may be utilized herein to describe one or more suitable elements, these elements should not be limited by these terms. These terms are only utilized to distinguish one element from another element. Throughout this specification and the drawings, elements having substantially the same functional configuration are designated by reference to the same reference numerals to avoid redundant description.

The "particle size (or even particle diameter)" of a particle in this disclosure refers to its average diameter in the case where the particle is spherical, or its average major axis length in the case where the particle is non-spherical. The particle size of the particles may be measured utilizing a particle size analyzer (PSA). The "particle size" of a particle may be, for example, the average particle size. An average particle size may be, for example, a median particle diameter (D50). D50 corresponds to the size of a particle corresponding to 50% cumulative volume, calculated from the smaller particle size in a particle size distribution measured by, for example, laser diffraction.

The term "metal" utilized herein includes both (e.g., simultaneously) metals and metalloids such as silicon and germanium, in an elemental or ionic state.

The term "alloy" utilized herein refers to a mixture of two or more metals.

The term "cathode active material" utilized herein refers to a cathode material capable of undergoing lithiation and delithiation.

The term "anode active material" utilized herein refers to an anode material capable of undergoing lithiation and delithiation.

The terms "lithiation" and "lithiate" utilized herein refer to a process of adding lithium to a cathode active material or an anode active material.

The terms "delithiation" and "delithiate" utilized herein refer to a process of removing lithium from a cathode active material or an anode active material.

The terms "charging" and "charge" utilized herein refer to a process of providing electrochemical energy to a battery.

The terms "discharging" and "discharge" utilized herein refer to a process of removing electrochemical energy from a battery.

The term "cathode" utilized herein refers to an electrode in which electrochemical reduction and lithiation occur during a discharging process.

The term "anode" utilized herein refers to an electrode in which electrochemical oxidation and delithiation occurs during a discharge process.

" The term "providing A on B" shall not mean "providing directly on" - although that is not excluded - but shall also include embodiments where e.g. there are further layers between A and B."

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. Further, the utilization of "may" when describing embodiments of the present disclosure refers to "one or more embodiments of the present disclosure". "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Hereinafter, an anode for a lithium metal battery according to example embodiments, a lithium metal battery including the same, and a method of manufacturing the lithium metal battery will be described in more detail.

### Anode

An anode for a lithium metal battery according to embodiments includes an anode current collector, and an electrodeposition inducing layer disposed on the anode current collector, wherein the electrodeposition inducing layer includes chromium (Cr). In the sense of the present invention, an electrodeposition inducing layer especially means and/or includes a layer that induces uniform/non-uniform electrodeposition of lithium metal. The electrodeposition inducing layer including chromium (Cr) may have reduced reactivity with respect to an electrolyte. For example, the deterioration of the electrodeposition inducing layer including chromium (Cr) by electrolytes, may be suppressed or reduced. Side reactions between the electrodeposition inducing layer including chromium (Cr) and an electrolyte, such as an electrolyte solution, may be suppressed or reduced. An electrodeposition inducing layer including chromium (Cr) may effectively prevent or reduce the generation and/or growth of lithium dendrites on the surface of the electrodeposition inducing layer or the surface of the anode active material layer. Therefore, the electrodeposition inducing layer including chromium (Cr) may induce substantially uniform electrodeposition of an anode active material layer including lithium metal which is to be formed on the electrodeposition inducing layer. The stability of an anode including an electrodeposition inducing layer including chromium (Cr) and a lithium battery utilizing the same is improved, and the cycle characteristics of the lithium battery are improved.

In contrast, in some embodiments, if (e.g., when) an electrodeposition inducing layer is not formed or does not include chromium (Cr), the reactivity with respect to the electrolyte may be increased. Side reactions between the electrodeposition inducing layer that does not include chromium (Cr) and the electrolyte, for example, the electrolyte solution, may become significant. An electrodeposition inducing layer that does not include chromium (Cr) may have difficulty in effectively suppressing the generation and/or growth of lithium dendrites on the surface of the anode active material layer including lithium metal formed on the electrodeposition inducing layer.

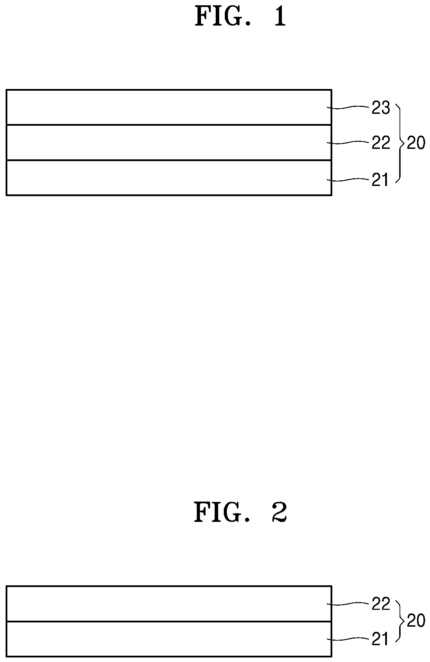

Referring to FIG. 1, an anode 20 includes an anode current collector 21, an anode active material layer 23 disposed on the anode current collector 21, and an electrodeposition inducing layer 22 disposed between the anode current collector 21 and the anode active material layer 23, wherein the electrodeposition inducing layer 22 includes chromium (Cr), and the anode active material layer 23 may include lithium metal or lithium alloy. Referring to FIG. 2, the anode 20 includes the anode current collector 21, and does not include the anode active material layer 23 disposed on the anode current collector 21, and includes the electrodeposition inducing layer 22 disposed between the anode current collector 21 and the anode active material layer 23, and the electrodeposition inducing layer 22 includes chromium (Cr), and the anode active material layer 23 includes lithium metal or lithium alloy.

### Anode: electrodeposition inducing layer

Referring to FIGS. 1 to 4, the anode 20 includes the anode current collector 21 and the electrodeposition inducing layer 22 disposed on the anode current collector 21. The electrodeposition inducing layer 22 includes chromium (Cr). The electrodeposition inducing layer 22 may effectively prevent or reduce the generation and/or growth of lithium dendrites on the surface of the electrodeposition inducing layer 22 or on the surface of the anode active material layer including lithium metal. Because the electrodeposition inducing layer 22 including chromium (Cr) does not react with lithium metal, the stability of the lithium battery may be improved.

The electrodeposition inducing layer 22 may include chromium (Cr). For example, the electrodeposition inducing layer 22 may include chromium hydroxide, chromium oxide, or a combination thereof. Chromium hydroxide, chromium oxide, or a combination thereof may include, for example, Cr(OH)₃, Cr₂O₃, CrOs, or a combination thereof. The electrodeposition inducing layer 22 may be derived from chromate, dichromate, chromic acid, a chromate salt compound, or a combination thereof. The electrodeposition inducing layer 22 may include composite particles. Composite particles may each include, for example, a core, and a shell disposed on the core, wherein the core includes the same metal as the anode current collector, and the shell may include chromium (Cr). The shell may be provided, for example, by coating the core with a shell-forming material including chromium (Cr).

For example, the electrodeposition inducing layer 22 may be free of polymers. Therefore, because a polymer is not included, the electrodeposition inducing layer 22 may have a polymer-free structure including metal, solvent, or a combination thereof.

The particle size of the composite particles may be, for example, about 0.5 µm to about 10 µm. If (e.g., when) the electrodeposition inducing layer includes composite particles in this range, the lithium dendrite formation inhibition property of the electrodeposition inducing layer may be further improved.

The content (e.g., amount) of chromium (Cr) may be, for example, about 0.1 wt% to about 10 wt%, about 0.5 wt% to about 9 wt%, about 1 wt% to about 8 wt%, about 2 wt% to about 7 wt%, about 3 wt% to about 6 wt%, or about 4 wt% to about 6 wt%, based on the total weight of the electrodeposition inducing layer 22. If (e.g., when) the electrodeposition inducing layer includes chromium (Cr) in these ranges, the charging characteristics and cycle characteristics of the lithium battery including the electrodeposition inducing layer may be further improved.

The chromium adhesion content (e.g., amount per surface area) of the electrodeposition inducing layer 22 may be, for example, about 1.0 mg/m² to about 100 mg/m², about 5 mg/m² to about 80 mg/m², about 20 mg/m² to about 60 mg/m², or about 30 mg/m² to about 50 mg/m², but is not necessarily limited to these ranges and may be adjusted depending on the type or kind and capacity of the lithium battery required.

The thickness of the electrodeposition inducing layer 22 may be, for example, about 0.01 µm to about 5 µm, about 0.1 µm to about 5 µm, about 0.5 µm to about 5 µm, about 1 µm to about 4.5 µm, about 1.5 µm to about 4 µm, about 2 µm to about 3.5 µm, or about 2.5 µm to about 3 µm, but is not necessarily limited to these ranges and may be adjusted depending on the type or kind and capacity of the lithium battery required. If (e.g., when) the thickness of the electrodeposition inducing layer is too small, it may be difficult to perform the function of the electrodeposition inducing layer. If (e.g., when) the thickness of the electrodeposition inducing layer is increased too much, internal resistance increases and the energy density of the lithium battery may be decreased.

The ratio of the thickness of the electrodeposition inducing layer 22 to the thickness of the anode current collector 21 may be about 0.01 to about 0.45, about 0.05 to about 0.45, about 0.1 to about 0.45, about 0.2 to about 0.45, about 0.3 to about 0.45, about 0.01 to about 0.4, about 0.05 to about 0.4, about 0.1 to about 0.4, about 0.2 to about 0.4, or about 0.3 to about 0.4, but is not necessarily limited to these ranges and may be adjusted depending on the type or kind and capacity of the lithium battery required. If (e.g., when) the thickness ratio of the electrodeposition inducing layer is too small or is too high (increased) compared to the thickness of the anode current collector (e.g., out of the above ratios), Pit may be difficult to perform the function of the electrodeposition inducing layer.

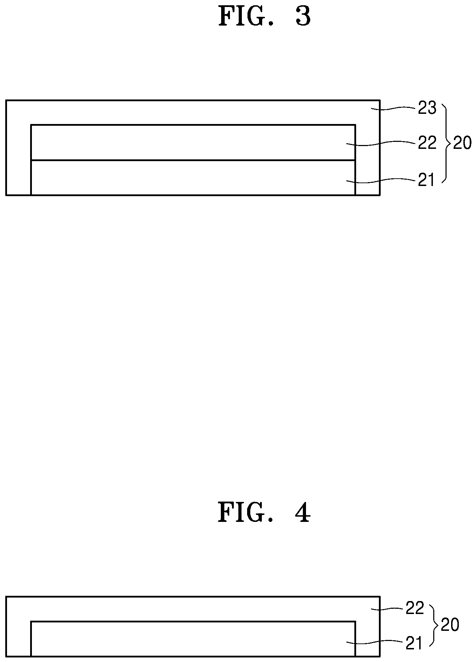

Referring to FIGS. 3 and 4, the electrodeposition inducing layer 22 may be additionally disposed on the sides of the anode current collector 21.

Referring to FIG. 3, the anode 20 includes the anode current collector 21, the anode active material layer 23 disposed on the anode current collector 21, and the electrodeposition inducing layer 22 disposed between the anode current collector 21 and the anode active material layer 23, wherein the electrodeposition inducing layer 22 includes chromium (Cr), and the anode active material layer 23 includes lithium metal or lithium alloy, and the electrodeposition inducing layer 22 may be disposed to extend to at least one side of the anode current collector 21. The electrodeposition inducing layer 22 may completely cover the anode current collector 21 and may extend to the side of the anode current collector 21. The electrodeposition inducing layer 22 may completely cover the side surface of the anode current collector 21. By extending the electrodeposition inducing layer 22 to at least one side of the anode current collector 21, it more effectively protects the anode current collector 21 and effectively suppresses the formation of lithium dendrites formed on the anode active material layer 23.

Referring to FIG. 4, the anode 20 includes the anode current collector 21, and the electrodeposition inducing layer 22 disposed on the anode current collector 21, wherein the electrodeposition inducing layer 22 includes chromium (Cr), and the electrodeposition inducing layer 22 may be disposed to extend to at least one of the anode current collector 21. The electrodeposition inducing layer 22 may be disposed to extend to the side of the anode current collector 21. The electrodeposition inducing layer 22 may completely cover the side surface of the anode current collector 21. By disposing the electrodeposition inducing layer 22 to extend to at least one side of the anode current collector 21, the substantially uniform electrodeposition of the lithium metal layer precipitated on the electrodeposition inducing layer 22 may be induced and the formation of lithium dendrites may be suppressed or reduced.

### Anode: anode active material layer

Referring to FIGS. 1 and 3, the anode 20 for a lithium metal battery includes the anode current collector 21, and the anode active material layer 23 disposed on the anode current collector 21, and the electrodeposition inducing layer 22 disposed between the anode current collector 21 and the anode active material layer 23, and the anode active material layer 23 may include lithium metal or lithium alloy. The anode active material layer 23 may be disposed between the electrodeposition inducing layer 22 and an electrolyte layer 30, which will be described later.

The anode active material layer 23 may be, for example, a metal layer. The anode active material layer 23 may include, for example, lithium metal or lithium alloy. The anode active material layer 23 may include, for example, lithium foil, lithium powder, plated lithium, a lithium alloy, a lithium-containing organic compound, or a combination thereof. The anode active material layer including lithium foil may be, for example, a lithium metal layer. The anode active material layer including lithium powder may be introduced by coating the anode current collector with a slurry including lithium powder and a binder. The binder may be, for example, a fluorine-based binder such as polyvinylidene fluoride (PVDF). The anode active material layer may not include (e.g., may exclude) a carbon-based anode active material. Therefore, the anode active material layer may include (e.g., consist of) a metal-based anode active material. The anode active material layer 23 may include, for example, non-fibrous lithium or non-acicular lithium. The anode active material layer 23 may include, for example, plate-shaped lithium.

The thickness of the lithium foil may be, for example, about 1 µm to about 50 µm, about 1 µm to about 30 µm, or about 10 µm to about 30 µm, or about 10 µm to about 80 µm. If (e.g., when) the lithium foil has a thickness within these ranges, the lifespan characteristics of the lithium battery including the electrodeposition inducing layer may be further improved. The particle size of the lithium powder may be, for example, about 0.1 µm to about 3 µm, about 0.1 µm to about 2 µm, or about 0.1 µm to about 2 µm. If (e.g., when) the lithium powder has a thickness within these ranges, the lifespan characteristics of a lithium battery including an electrodeposition inducing layer may be further improved.

The thickness of the anode active material layer 23 may be, for example, about 0.1 µm to about 100 µm, about 0.1 µm to about 80 µm, about 1 µm to about 80 µm, or about 10 µm to about 80 µm, but is not necessarily limited to these ranges and may be adjusted depending on the type or kind and capacity of the lithium battery required.

Referring to FIGS. 2 and 4, the anode 20 may not include (e.g., may exclude) the anode active material layer 23 disposed on the anode current collector 21 and the electrodeposition inducing layer 22. Regarding the anode 20, which does not include the anode active material layer 23, after the anode 20 is introduced into a lithium battery together with a cathode and an electrolyte, lithium metal may be plated on the anode current collector 21 and the electrodeposition inducing layer 22 by charging. As such, the anode active material layer 23 may be included therein. The anode active material layer may be a plated lithium layer. The anode active material layer 23 may include, for example, non-fibrous lithium or non-acicular lithium. The anode active material layer 23 may include, for example, plate-shaped lithium.

### Anode: anode current collector

Referring to FIGS. 1 to 4, the anode 20 for a lithium metal battery includes the anode current collector 21.

The anode current collector 21 may include, for example, a first metal substrate. The first metal substrate may include a first metal as a main component or may include (e.g., consist of) the first metal. The first metal substrate may include the first metal as a main component or may include (e.g., consist of) the first metal. The content (e.g., amount) of the first metal included in the first metal substrate may be, for example, about 90 wt% or more, about 95 wt% or more, about 99 wt% or more, or about 99.9 wt% or more, based on the total weight of the first metal substrate. The first metal substrate may include, for example, a material that does not react with lithium, that is, does not form an alloy and/or compound with lithium. The first metal may be, for example, copper (Cu), nickel (Ni), stainless steel (SUS), iron (Fe), cobalt (Co), tantalum (Ta), tungsten (W), or a combination thereof. However, the first metal is not limited thereto, and any material utilized as a current collector in the relevant technical field may be applicable herein. The first metal substrate may include, for example, one of these metals or an alloy of two or more metals thereof. The first metal substrate may be, for example, in the form of a sheet or foil. The thickness of the anode current collector 21 may be, for example, about 5 µm to about 50 µm, about 10 µm to about 50 µm, about 10 µm to about 40 µm, or about 10 µm to about 30 µm, and is not necessarily limited to these ranges. The thickness may vary depending on required characteristics of the lithium battery.

The anode current collector 21 may further include a coating layer including a second metal on the first metal substrate.

The anode current collector 21 may include, for example, a first metal substrate, and a coating layer disposed on the first metal substrate and including a second metal. The second metal has a higher Mohs hardness than the first metal. The coating layer containing the second metal is harder than the substrate containing the first metal. Therefore, deterioration of the first metal substrate may be prevented or reduced. The Mohs hardness of the material constituting the first metal substrate may be, for example, about 5.5 or less. The Mohs hardness of the first metal may be, for example, about 5.5 or less, about 5.0 or less, about 4.5 or less, about 4.0 or less, about 3.5 or less, or about 3.0 or less. The Mohs hardness of the first metal may be, for example, about 2.0 to about 6.0. The coating layer may include the second metal. The coating layer may include the second metal as a main component or may include (e.g., consist of) the second metal. The content (e.g., amount) of the second metal included in the coating layer may be, for example, about 90 wt% or more, about 95 wt% or more, about 99 wt% or more, or about 99.9 wt% or more, based on the total weight of the coating layer. The coating layer may include, for example, a material that does not react with lithium, that is, does not form an alloy and/or compound with lithium. The Mohs hardness of the material constituting the coating layer may be, for example, about 6.0 or higher. For example, the Mohs hardness of the second metal may be about 6.0 or more, about 6.5 or more, about 7.0 or more, about 7.5 or more, about 8.0 or more, about 8.5 or more, or about 9.0 or more. The Mohs hardness of the second metal may be, for example, about 6.0 to about 12. If (e.g., when) the Mohs hardness of the second metal is too low, it may be difficult to suppress or reduce deterioration of the anode current collector. If (e.g., when) the Mohs hardness of the second metal is too high, processing may not be easy. The second metal may be, for example, at least one selected from among titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may include, for example, one of these metals or an alloy of two or more metals thereof. The difference between Mohs hardness of the first metal included in the first metal substrate and Mohs hardness of the second metal included in the coating layer may be, for example, about 2 or more, about 2.5 or more, about 3 or more, about 3.5 or more, or about 4 or more. If (e.g., when) the first metal and the second metal have such a difference in Mohs hardness, deterioration of the anode current collector may be more effectively suppressed or reduced. The coating layer may have a single-layer structure or a multilayer structure of two or more layers. The coating layer may have, for example, a two-layer structure including a first coating layer and a second coating layer. The coating layer may have, for example, a three-layer structure including a first coating layer, a second coating layer, and a third coating layer. The thickness of the coating layer may be, for example, about 10 nm to about 1 µm, about 50 nm to about 500 nm, about 50 nm to about 200 nm, or about 50 nm to about 150 nm. If (e.g., when) the thickness of the coating layer is too small, it may be difficult to suppress or reduce substantially non-uniform growth of a lithium-containing metal layer. As the thickness of the coating layer is increased, the cycle characteristics of the lithium battery are improved, but if (e.g., when) the coating layer is too thick (or too large), the energy density of the lithium battery is reduced and the coating layer may not be easy to form. The coating layer may be disposed on the first metal substrate by, for example, a vacuum deposition method, a sputtering method, a plating method, etc., but the method of forming the coating layer is not necessarily limited to these methods, and any method capable of forming a coating layer in the relevant technical field may be utilized herein.

In some embodiments, the anode current collector 21 may include, for example, a base film and a metal layer disposed on at least one side (e.g., one or both (e.g., opposite) sides) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or one or more combinations thereof. The polymer may be an insulating polymer. In some embodiments, due to the inclusion of an insulating thermoplastic polymer in the base film, if (e.g., when) a short circuit occurs, the base film softens or liquefies and blocks battery operation, thereby suppressing a rapid increase in current. The metal layer may include, for example, copper (Cu), stainless steel, titanium (Ti), iron (Fe), cobalt (Co), nickel (Ni), or an alloy thereof. For example, the metal layer may correspond to the first metal substrate. The metal layer may additionally include a coating layer including a second metal. The anode current collector 21 may additionally include metal chip and/or a lead tab. For more detailed information about the base film, the metal layer, the metal chip, and the lead tab of the anode current collector 21, a cathode current collector may be referred to. By having this structure, the anode current collector 21 may contribute to a decrease in the weight of the anode and consequently improve the energy density of an anode and a lithium battery.

### Anode: protective layer

Referring to FIGS. 1 to 4, the anode 20 for a lithium metal battery may further include a protective layer disposed between the anode 20 for a lithium metal battery and an electrolyte layer 30 to be described later. The anode active material layer 23 may be disposed between the protective layer and the anode 20, for example, the electrodeposition inducing layer 22. The anode active material layer 23 may be disposed between the electrodeposition inducing layer 22 and the protective layer. In some embodiments, if (e.g., when) the anode 20 additionally includes a protective layer to protect the anode active material layer 23, additional reactions thereof with the electrolyte layer 30 may be suppressed or reduced, and the generation and/or growth of lithium dendrites may be further suppressed or reduced. The protective layer may not be provided.

### Anode: anode interlayer

Referring to FIGS. 1 and 3, the anode 20 for a lithium metal battery may optionally further include an anode interlayer disposed between the electrodeposition inducing layer 22 and the anode active material layer 23. Referring to FIGS. 2 and 4, the anode 20 may further include an anode interlayer disposed between the electrodeposition inducing layer 22 and the anode current collector 21 or on the electrodeposition inducing layer 22. In some embodiments, if (e.g., when) the anode 20 additionally includes an anode interlayer, the generation and/or growth of lithium dendrites in the anode 20 may be more effectively suppressed or reduced. The anode interlayer may not be provided.

The anode interlayer may include, for example, an anode active material and a binder. The anode active material may be an anode material that is capable of being lithiated and delithiated. The anode active material included in the anode interlayer may have, for example, the form of particles. The average particle size of the anode active material in a particle form (e.g., in the form of particles) may be, for example, about 10 nm to about 4 µm, about 10 nm to about 1 µm, about 10 nm to about 500 nm, about 10 nm to about 100 nm, or about 20 nm to about 80 nm. If (e.g., when) the anode active material has these ranges of average particle sizes, reversible plating and/or dissolution of lithium may be more easily performed during charging and discharging. The average particle size of the anode active material may be, for example, the D50 measured utilizing a laser particle size distribution meter.

The anode active material included in the anode interlayer may include, for example, one or more selected from among carbon-based anode active materials and metal or metalloid anode active materials. The carbon-based anode active material may be, for example, amorphous carbon. Carbon-based anode active materials may include, for example, carbon black (CB), acetylene black (AB), furnace black (FB), ketjen black (KB), and graphene, etc., but are not necessarily limited thereto, and any carbon that is classified as amorphous carbon in the relevant technical field may be applicable herein. Amorphous carbon is carbon that does not have crystallinity or has very low crystallinity, and is distinguished from crystalline carbon or graphite-based carbon. Metal or metalloid anode active materials may include gold (Au), platinum (Pt), palladium (Pd), silicon (Si), silver (Ag), aluminum (Al), bismuth (Bi), tin (Sn), and zinc (Zn), but are not necessarily limited thereto, and any metal anode active material or metalloid anode active material that forms an alloy or compound with lithium in the relevant technical field may be applicable herein. For example, nickel (Ni) does not form an alloy with lithium and is therefore not a metal anode active material in this specification. The anode interlayer includes one type or kind of anode active material among these anode active materials, or a mixture of a plurality of different anode active materials. The anode interlayer may include, for example, a mixture including amorphous carbon, one or more selected from gold (Au), platinum (Pt), palladium (Pd), silicon (Si), silver (Ag), aluminum (Al), bismuth (Bi), tin (Sn), and zinc (Zn). The mixing ratio of the mixture may be, for example, about 10:1 to about 1:2, about 10:1 to about 1:1, about 7:1 to about 1:1, about 5:1 to about 1:1, or about 4:1 to about 2:1, by weight. The anode active material included in the anode interlayer may include, for example, a mixture of first particles consisting of amorphous carbon and second particles consisting of metal or metalloid. Metals may include, for example, gold (Au), platinum (Pt), palladium (Pd), silicon (Si), silver (Ag), aluminum (Al), bismuth (Bi), tin (Sn), and zinc (Zn). The content (e.g., amount) of the second particles may be about 8 wt% to about 60 wt%, about 10 wt% to about 50 wt%, about 15 wt% to about 40 wt%, or about 20 wt% to about 30 wt%, based on the total weight of the mixture. By having the content (e.g., amount) of the second particles in this range, for example, the cycle characteristics of the lithium battery are further improved.

The binder contained in the anode interlayer may be, for example, styrenebutadiene rubber (SBR), polytetrafluoroethylene, polyvinylidene fluoride, polyethylene, vinylidene fluoride/hexafluoropropylene copolymer, polyacrylonitrile, polymethyl methacrylate, etc., but is not necessarily limited thereto and any binder that is utilized in the relevant technical field may be applicable herein. The binder may include a single binder or a plurality of different binders. If (e.g., when) the anode interlayer does not contain a binder, the anode interlayer may be easily separated from the electrodeposition inducing layer 22 or the anode current collector 21. The content (e.g., amount) of the binder included in the anode interlayer may be, for example, about 1 wt% to about 20 wt% based on the total weight of the anode interlayer.

The thickness of the anode interlayer may be, for example, about 1 µm to about 20 µm, about 1 µm to about 15 µm, about or 2 µm to about 10 µm, or 3 µm to about 7 µm. The thickness of the anode interlayer may be, for example, about 1 % to about 50%, about 1% to about 30%, about 1% to about 10%, or about 1% to about 5%, of the thickness of the cathode active material layer. If (e.g., when) the thickness of the anode interlayer is too small, lithium dendrites formed between the anode interlayer and the anode current collector may collapse the anode interlayer, and cycle characteristics of the lithium battery may not be improved. If (e.g., when) the thickness of the anode interlayer is excessively increased (e.g., too large), the energy density of a lithium battery utilizing the anode 20 may be decreased and cycle characteristics thereof may not be improved. If (e.g., when) the thickness of the anode interlayer is decreased (e.g., too small), for example, the charging capacity of the anode interlayer may also be decreased. The charge capacity of the anode interlayer may be, for example, about 0.1% to about 50%, about 1% to about 30%, about 1% to about 10%, about 1 % to about 5%, or about 1 % to about 2% of the charge capacity. If (e.g., when) the charging capacity of the anode interlayer is too small (e.g., too low), lithium dendrites formed between the anode interlayer and the anode current collector may collapse the anode interlayer, and cycle characteristics of the lithium battery may not be improved. If (e.g., when) the charging capacity of the anode interlayer is excessively increased (e.g., too large or high), the energy density of a lithium battery utilizing the anode 20 may be decreased and cycle characteristics may not be improved. The charging capacity of a cathode active material layer may be obtained by multiplying the charging capacity density (mAh/g) of the cathode active material by the mass of the cathode active material in a cathode active material layer. If (e.g., when) several types (kinds) of cathode active materials are utilized, the charging capacity density is multiplied by mass value for each cathode active material. The sum of these values is the charging capacity of the cathode active material layer. The charging capacity of the anode interlayer is also calculated in substantially the same way. The charging capacity of the anode interlayer is obtained by multiplying the charging capacity density (mAh/g) of the anode active material by the mass of the anode active material in an anode interlayer. If (e.g., when) several types (kinds) of anode active materials are utilized, the charge capacity density is multiplied by mass value for each anode active material, and the sum of these values is utilized as the capacity of the anode interlayer. Herein, the charging capacity densities of the cathode active material and the anode active material are capacities estimated utilizing an all-solid half-cell utilizing lithium metal as a counter electrode. The charging capacity of the cathode active material layer and the anode interlayer are directly measured by measuring the charging capacity utilizing an all-solid half-cell. If (e.g., when) the measured charging capacity is divided by the mass of each active material, the charging capacity density is obtained. In some embodiments, the charging capacity of the cathode active material layer and the anode interlayer may be the initial charging capacity measured at the time of the first cycle charge.

### Lithium metal battery

A lithium metal battery according to embodiments includes a cathode, the anode described previously, and an electrolyte layer disposed between the cathode and the anode, wherein the anode includes lithium metal or lithium alloy. In some embodiments, if (e.g., when) a lithium metal battery includes the anode described previously, improved capacity and excellent or suitable lifespan characteristics may be provided at the same time. The lithium metal battery may be, for example, a lithium primary battery, a lithium secondary battery, a lithium-sulfur battery, a lithium-air battery, etc., but is not limited to these and any lithium metal battery utilized in the relevant technical field may be utilized.

A lithium metal battery is manufactured by, for example, the following example method, but is not necessarily limited to this method and is adjusted according to required conditions.

### Anode

An anode including lithium metal or lithium alloy as described previously may be prepared.

### Cathode

First, a cathode active material composition is prepared by mixing a cathode active material, a conductive agent, a binder, and a solvent. The prepared cathode active material composition is directly applied onto an aluminum current collector and dried to prepare a cathode plate having a cathode active material layer formed thereon. In some embodiments, the cathode active material composition may be cast on a separate support, and then a film obtained by peeling from the support is laminated on an aluminum current collector to prepare a cathode plate having a cathode active material layer formed thereon.

The cathode active material is a lithium-containing metal oxide, and any material commonly utilized in the relevant technical field may be utilized without limitation. For example, one or more types (kinds) of composite oxides of lithium and a metal selected from among cobalt, manganese, nickel, and combinations thereof may be utilized, and an example thereof may be a compound represented by one of following: LiₐA_{1-b}B_{b}D₂(where 0.90 ≤ a ≤ 1, and 0 ≤ b ≤ 0.5); LiₐE_{1-b}B_{b}O_{2-c}D_{c} (where 0.90 ≤ a ≤ 1, 0 ≤ b ≤ 0.5, and 0 ≤ c ≤ 0.05); LiE_{2-b}B_{b}O_{4-c}D_{c} (where 0 ≤ b ≤ 0.5, and 0 ≤ c ≤ 0.05); LiₐNi_{1-b-c}Co_{b}B_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Co_{b}B_{c}O_{2-α}F_{α} (where 0.90 ≤ a ≤ 1, 0 ≤ b ≤ 0.5, 0 ≤ c ≤ 0.05, and 0 < α < 2); LiₐNi_{1-b-c}Co_{b}B_{c}O_{2-α}F₂ (where 0.90 ≤ a ≤ 1, 0 ≤ b ≤ 0.5, 0 ≤ c ≤ 0.05, and 0 < α < 2); LiₐNi_{1-b-c}Mn_{b}B_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Mn_{b}B_{c}O_{2-α}F_{α} (where 0.90 ≤ a ≤ 1, 0 ≤ b ≤ 0.5, and 0 ≤ c ≤ 0.05, 0 < α < 2); LiₐNi_{1-b-c}Mn_{b}B_{c}O_{2-α}F₂ (where 0.90 ≤ a ≤ 1, 0 ≤ b ≤ 0.5, 0 ≤ c ≤ 0.05, and 0 < α < 2); LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GeO₂ (where 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (where 0.90 ≤ a ≤ 1 and 0.001 ≤ b ≤ 0.1); LiₐCoG_{b}O₂ (where 0.90 ≤ a ≤ 1 and 0.001 ≤ b ≤ 0.1); LiₐMnG_{b}O₂ (where 0.90 ≤ a ≤ 1 and 0.001 ≤ b ≤ 0.1); LiₐMn₂G_{b}O₄ (where 0.90 ≤ a ≤ 1 and 0.001 ≤ b ≤ 0.1); QO₂; QS₂; LiQS₂; V₂O₅; LiV₂O₅; LiIO₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In the Formulae representing these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. A compound in which a coating layer is provided on the surface of these compounds may be utilized, and a mixture of these compounds and the compounds provided with the coating layer may also be utilized. The coating layer provided on the surface of these compounds may include a coating element compound such as an oxide of a coating element, a hydroxide of a coating element, an oxyhydroxide of a coating element, an oxycarbonate of a coating element, or a hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, and/or the like. A more detailed description of the coating method will not be provided because it should be well or suitably understood by those in the relevant technical field.

A cathode active material may be represented by, for example, one of the following formulae: LiₐNiₓCo_{y}M_{z}O_{2-b}A_{b} (1.0≤a≤1.2, 0≤b≤0.2, 0.8≤x<1, 0<y≤0.3, 0<z≤0.3, and x+y+z=1, wherein M is manganese (Mn), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and A may be F, S, Cl, Br, or a combination thereof); LiNiₓCo_{y}Mn_{z}O₂ (0.8≤x≤0.95, 0≤y≤0.2, 0<z≤0.2, and x+y+z=1), LiNiₓCo_{y}Al_{z}O₂ (0.8≤x≤0.95, 0≤y≤0.2, 0<z≤0.2 and x+y+z=1), LiNiₓCo_{y}Mn_{z}Al_{w}O₂ (0.8≤x≤0.95, 0≤y≤0.2, 0<z≤0.2, 0<w≤0.2, and x+y+z+w=1), LiₐCoₓM_{y}O_{2-b}A_{b} (1.0≤a≤1.2, 0≤b≤0.2, 0.9≤x≤1, 0≤y≤0.1, and x+y=1, M may be manganese (Mn), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and A may be F, S, Cl, Br or combination thereof); LiₐNiₓMn_{y}M'_{z}O_{2-b}A_{b} (1.0≤a≤1.2, 0≤b≤0.2, 0<x≤0.3, 0.5≤y<1 , 0<z≤0.3, and x+y+z=1, M' is cobalt (Co), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and A may be F, S, Cl, Br, or a combination thereof); LiₐM1ₓM2_{y}PO_{4-b}X_{b} (regarding Formula 7, 0.90≤a≤1.1, 0≤x≤0.9, 0≤y≤0.5, 0.9<x+y<1.1, and 0≤b≤2, M1 is chromium (Cr), manganese (Mn), iron (Fe), cobalt (Co), nickel (Ni), copper (Cu), zirconium (Zr) or a combination thereof, and M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P or a combination thereof); and LiₐM3_{z}PO₄ (0.90≤a≤1.1, and 0.9≤z≤1.1, and M3 is chromium (Cr), manganese (Mn), iron (Fe), cobalt (Co), nickel (Ni), copper (Cu), zirconium (Zr) or a combination thereof).

Examples of the conductive agent include carbon black, graphite particles, natural graphite, artificial graphite, acetylene black, Ketjen black, carbon fiber, carbon nanotubes; metal powders or metal fibers or metal tubes of metal, such as copper, nickel, aluminum, silver; and a conductive polymer such as polyphenylene derivatives are utilized, but are not limited thereto, and any materials utilized as conductive materials in the relevant technical field may be utilized therefor herein. In some embodiments, the cathode may not include (e.g., may exclude), for example, a separate conductive agent.

The binder may be a vinylidene fluoride/hexafluoropropylene copolymer, polyvinylidene fluoride, polyacrylonitrile, polymethyl methacrylate, polytetrafluoroethylene (PTFE), a mixture of these polymers, a styrene butadiene rubber-based polymer, etc. The solvent may be N-methylpyrrolidone (NMP), acetone, water, etc. However, the binder and the solvent are not limited thereto, and may be any binder or solvent that is utilized in the relevant technical field.

A plasticizer or a pore forming agent may be added to the cathode active material composition to form pores in an electrode plate.

The contents of the cathode active material, the conductive agent, the binder, and the solvent utilized for the cathode are at such levels that are normally utilized in lithium batteries. Depending on the use and configuration of the lithium battery, one or more of the conductive agent, the binder, and the solvent may not be provided.

The content (e.g., amount) of binder included in the cathode may be about 0.1 wt% to about 10 wt% or about 0.1 wt% to about 5 wt%, of the total weight of the cathode active material layer. The content (e.g., amount) of the cathode active material included in the cathode may be about 80 wt% to about 99 wt%, about 90 wt% to about 99 wt%, or about 95 wt% to about 99 wt%, of the total weight of the cathode active material layer.

The cathode current collector may include, for example, indium (In), copper (Cu), magnesium (Mg), stainless steel, titanium (Ti), iron (Fe), cobalt (Co), nickel (Ni), zinc (Zn), A plate or foil made of aluminum (Al), germanium (Ge), lithium (Li), or an alloy thereof. The thickness of the cathode current collector may be, for example, about 1 µm to about 100 µm, about 1 µm to about 50 µm, about 5 µm to about 25 µm, or about 10 µm to about 20 µm.

The cathode current collector may include, for example, a base film and a metal layer disposed on at least one side (e.g., one or both (e.g., opposite) sides) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combinations thereof. In some embodiments, the base film may be an insulator. In some embodiments, due to the inclusion of insulating thermoplastic polymer in the base film, if (e.g., when) a short circuit occurs, the base film softens or liquefies and blocks battery operation, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or alloys thereof. The metal layer may act as an electrochemical fuse and is cut in case of overcurrent to perform a short circuit prevention function. The limit current and the maximum current may be adjusted by adjusting the thickness of the metal layer. The metal layer may be plated or deposited on the base film. If (e.g., when) the thickness of the metal layer is reduced, the limit current and/or the maximum current of the cathode current collector are reduced, and thus stability of the lithium battery during a short circuit may be improved. For external connection, a lead tab may be added on the metal layer. The lead tab may be welded to the metal layer or the metal layer/base film laminate by ultrasonic welding, laser welding, spot welding, and/or the like. During welding, the base film and/or metal layer may melt and the metal layer may be electrically connected to the lead tab. To make welding between the metal layer and the lead tab more robust, a metal chip may be added between the metal layer and the lead tab. The metal chip may be a chip of the same material as the metal of the metal layer. The metal chip may be, for example, metal foil or metal mesh. The metal chip may be, for example, aluminum foil, copper foil, or SUS foil. By positioning the metal chip on the metal layer and welding the same to the lead tab, the lead tab may be welded to the metal chip/metal layer laminate or the metal chip/metal layer/base film laminate. During welding, the metal layer or the metal layer/metal chip laminate may be electrically connected to the lead tab while the base film, the metal layer, and/or the metal chip are melted. A metal chip and/or lead tab may be added onto a portion of the metal layer. The thickness of the base film may be, for example, about 1 µm to about 50 µm, about 1.5 µm to about 50 µm, about 1.5 µm to about 40 µm, or about 1 µm to about 30 µm. If (e.g., when) the base film has these ranges of thickness, the weight of an electrode assembly may be more effectively reduced. The melting point of the base film may be, for example, about 100 °C to about 300 °C, about 100 °C to about 250 °C, or about 100 °C to about 200 °C. If (e.g., when) the base film has these ranges of a melting point, the base film may be melted and easily coupled to the lead tab in the process of welding the lead tab. Surface-treatment such as corona treatment may be performed on the base film in order to improve adhesion between the base film and the metal layer. The thickness of the metal layer may be, for example, about 0.01 µm to about 3 µm, about 0.1 µm to about 3 µm, about 0.1 µm to about 2 µm, or about 0.1 µm to about 1 µm. If (e.g., when) the metal layer has these ranges of thickness, stability of the electrode assembly may be ensured while conductivity is maintained. The thickness of the metal chip may be, for example, about 2 µm to about 10 µm, about 2 µm to about 7 µm, or about 4 µm to about 6 µm. If (e.g., when) the metal chip has these ranges of thickness, connection between the metal layer and the lead tab may be more easily performed. By having this structure, the cathode current collector may contribute to a decrease in the weight of the cathode and consequently improve the energy density of a cathode and a lithium battery.

### Separator

Next, a separator to be inserted between the cathode and the anode is prepared.

As for the separator, any separator that is typically utilized in a lithium battery can be utilized. For example, any separator that has low resistance to ion migration of an electrolyte and excellent or suitable liquid electrolyte-wetting ability, may be utilized. The separator may be a non-woven fabric or a woven fabric including at least one selected from among fiberglass, polyester, Teflon, polyethylene, polypropylene, polytetrafluoroethylene (PTFE), and a combination thereof. For lithium-ion batteries, separators that can be wound, such as polyethylene and polypropylene, are utilized, and for lithium-ion polymer batteries, separators with excellent or suitable organic liquid electrolyte-wetting ability may be utilized.

The separator is manufactured by the following example method, but the present disclosure is not necessarily limited to this method and is adjusted according to conditions.

First, a separator composition is prepared by mixing a polymer resin, a filler, and a solvent. The separator composition is directly applied and dried on the electrode to form a separator. In some embodiments, after a separator composition is cast and dried on a support, a separator film peeled off from the support is laminated on the electrode to form a separator.

The polymer utilized to manufacture the separator is not limited, and any polymer utilized for the binder of an electrode plate may be utilized. For example, a vinylidene fluoride/hexafluoropropylene copolymer, polyvinylidene fluoride (PVDF), polyacrylonitrile, polymethyl methacrylate, or mixtures thereof may be utilized.

### Electrolyte

Next, an electrolyte is prepared. The electrolyte may be, for example, a liquid electrolyte, a solid electrolyte, a gel electrolyte, or a combination thereof. The electrolyte may be, for example, an organic liquid electrolyte. In embodiments, the organic liquid electrolyte may be prepared by dissolving a lithium salt in an organic solvent.

Any organic solvent that can be utilized as an organic solvent in the relevant technical field, may be utilized as the organic solvent herein. The organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

Any lithium salt may be utilized as long as it is utilized as a lithium salt in the relevant technical field. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(1≤x≤20, 1≤y≤20), LiCl, Lil, or a mixture thereof. The concentration of the lithium salt may be, for example, about 0.1 M to about 5.0 M.

The solid electrolyte may be, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may be at least one selected from among Pb(Zr,Ti)O₃(PZT), Pb₁₋ₓLaₓZr_{1-y} Ti_{y}O₃(PLZT)(O≤x<1, O≤y<1), PB(Mg₃Nb_{2/3})O₃-PbTiO₃(PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, and x is an integer from 1 to 10). The solid electrolyte may be produced by, for example, a sintering method and/or the like. For example, the oxide-based solid electrolyte may be a garnet system selected from Li₇La₃Zr₂O₁₂(LLZO) and Li₃₊ₓLa₃Zr₂₋ₐMₐO₁₂(M doped LLZO, M=Ga, W, Nb, Ta, or Al, and x is an integer from 1 to 10).

The sulfide-based solid electrolyte may include, for example, lithium sulfide, silicon sulfide, phosphorus sulfide, boron sulfide, or a combination thereof. The sulfide-based solid electrolyte particles may include Li₂S, P₂S₅, SiS₂, GeS₂, B₂S₃, or a combination thereof. The sulfide-based solid electrolyte particles may be Li₂S or P₂S₅. Sulfide-based solid electrolyte particles are suitable to have higher lithium ion conductivity than other inorganic compounds. For example, sulfide-based solid electrolytes include Li₂S and P₂S₅. If (e.g., when) the sulfide solid electrolyte material constituting the sulfide-based solid electrolyte includes Li₂S-P₂S₅, the mixed molar ratio of Li₂S to P₂S₅ may be, for example, in the range of about 50:50 to about 90:10. In some embodiments, an inorganic solid electrolyte, prepared by adding Li₃PO₄, halogen, a halogen compound, Li₂₊₂ₓZn₁₋ₓGeO₄("LISICON," 0≤x<1), Li_{3+y}PO₄₋ₓNₓ("LIPON," 0<x<4, 0<y<3), Li_{3.25}Ge_{0.25}P_{0.75}S₄("ThioLISICON"), Li₂O-Al₂O₃-TiO₂-P₂O₅("LATP") to Li₂S-P₂S₅, SiS₂, GeS₂, B₂S₃, or a combination thereof, may be utilized as a sulfide solid electrolyte. Non-limiting examples of sulfide solid electrolyte materials include Li₂S-P₂S₅; Li₂S-P₂S₅-LiX (X=halogen element); Li₂S-P₂S₅-Li₂O- Li₂S-P₂S₅-Li₂O-Lil; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S -P₂S₅-ZₘSₙ (0<m<10, 0<n<10, Z=Ge, Zn, or Ga); Li₂S-GeS₂; Li₂S-SiS₂-Li₃PO₄; and Li₂S-SiS₂-LiₚMO_{q} (0<p<10, 0<q<10, M=P, Si, Ge, B, Al, Ga, or In). In this regard, the sulfide-based solid electrolyte material may be prepared by treating raw starting materials (e.g., Li₂S, P₂S₅, etc.) of the sulfide-based solid electrolyte material by a melt quenching method, a mechanical milling method, and/or the like. In some embodiments, calcinations may be performed after the treatment. The sulfide-based solid electrolyte may be amorphous, crystalline, or a mixture thereof.

For example, the polymer solid electrolyte may include a mixture of a lithium salt and a polymer, or may include a polymer having an ion-conducting functional group. The polymer solid electrolyte may be, for example, a polymer electrolyte that is in a solid state at about 25 ° C and about 1 atm. The polymer solid electrolyte may not contain liquid, for example. The polymer solid electrolyte includes polymers, and the polymers may include, for example, polyethylene oxide (PEO), polyvinylidene fluoride (PVDF), vinylidene fluoride-hexafluoropropylene (PVDF-HFP), polyethylene oxide (PEO)., poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), polymethyl methacrylate (PMMA), poly(methylmethacrylate), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ketone) (SPEEK), sulfonated poly(arylene ether ketone ketone sulfone) (SPAEKKS), sulfonated poly(aryl ether ketone) (SPAEK), poly[bis(benzi)poly[bis(benzimidazobenzisoquinolinones)] (SPBIBI), polystyrene sulfonate (PSS), lithium 9,10-diphenylatlascene-2-sulfonate, 10-diphenylanthracene-2-sulfonate, DPASLi⁺), or a combination thereof, but is not limited to these and any polymer electrolyte utilized in the relevant technical field may be applicable herein. Any lithium salt can be utilized as long as the lithium salt can be utilized as a lithium salt in the relevant technical field. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are each from 1 to 20), LiCl, Lil, or a mixture thereof. The polymer included in the polymer solid electrolyte may be, for example, a compound including about 10 or more, about 20 or more, about 50 or more, or about 100 or more repeating units. The weight average molecular weight of the polymer contained in the polymer solid electrolyte may be, for example, about 1000 Dalton or more, about 10,000 Dalton or more, about 100,000 Dalton or more, or about 1,000,000 Dalton or more.

The gel electrolyte may be, for example, a polymer gel electrolyte. Also, the gel electrolyte may be in a gel state without polymers (e.g., exclude or excluding polymers or any polymer).

For example, the polymer gel electrolyte may include a liquid electrolyte and a polymer, or may include an organic solvent and a polymer having an ion-conducting functional group. The polymer gel electrolyte may be, for example, a polymer electrolyte in a gel state at about 25 °C and about 1 atm. For example, the polymer gel electrolyte may have a gel state without liquid (e.g., exclude or excluding liquid).

Liquid electrolytes utilized in polymer gel electrolytes include, for example, mixtures of ionic liquids, lithium salts, and organic solvents; mixtures of lithium salts and organic solvents; mixtures of ionic liquids and organic solvents; or mixtures of lithium salts, ionic liquids, and organic solvents. The polymer utilized in the polymer gel electrolyte may be selected from polymers utilized in the solid polymer electrolyte. The organic solvent may be selected from organic solvents utilized in liquid electrolytes. The lithium salt may be selected from lithium salts utilized in polymer solid electrolytes. The ionic liquid refers to a salt that is in a liquid state at room temperature or a molten salt at room temperature, which has a melting point equal to or lower than room temperature and consists only of ions. In some embodiments, the ionic liquid may be at least one selected from among compounds including: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof, and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. For example, a polymer solid electrolyte may form a polymer gel electrolyte by wetting with a liquid electrolyte in a secondary battery. The polymer gel electrolyte may further include inorganic particles. The polymer included in the polymer gel electrolyte may be, for example, a compound including about 10 or more, about 20 or more, about 50 or more, or about 100 or more repeating units. The weight average molecular weight of the polymer contained in the polymer gel electrolyte may be, for example, about 500 Dalton or more, about 1000 Dalton or more, about 10,000 Dalton or more, about 100,000 Dalton or more, or about 1,000,000 Dalton or more.

### Lithium metal battery

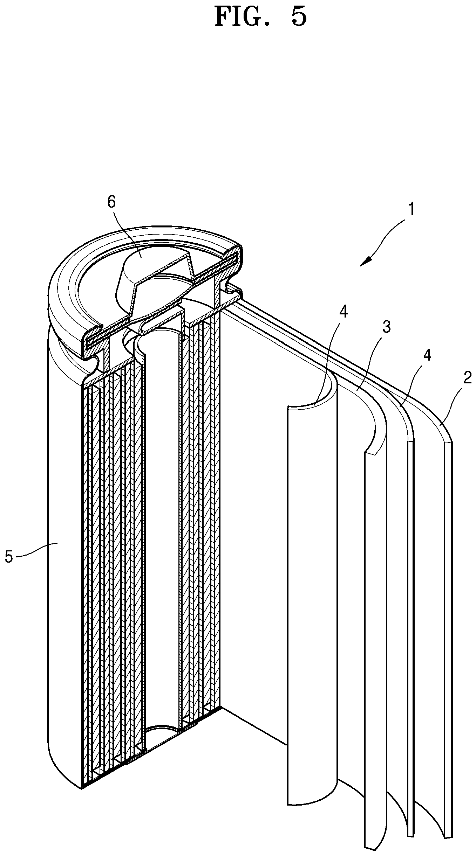

Referring to FIG. 5, a lithium metal battery 1 according to embodiments includes a cathode 3, the anode 2 as described previously, and a separator 4. In the sense of the present invention, cathode 3 and the anode 2 are independently same as cathode 10 and anode 20 as described previously. The cathode 3, the anode 2, and the separator 4 may be wound or folded to form a battery structure. The battery structure is accommodated in a battery case 5. An organic electrolyte solution is injected into the battery case 5 and sealed with a cap assembly 6 to complete the lithium metal battery 1. The battery case 5 may be cylindrical, but not necessarily limited to such a shape, and may be, for example, a prismatic shape, a thin film shape, and/or the like.

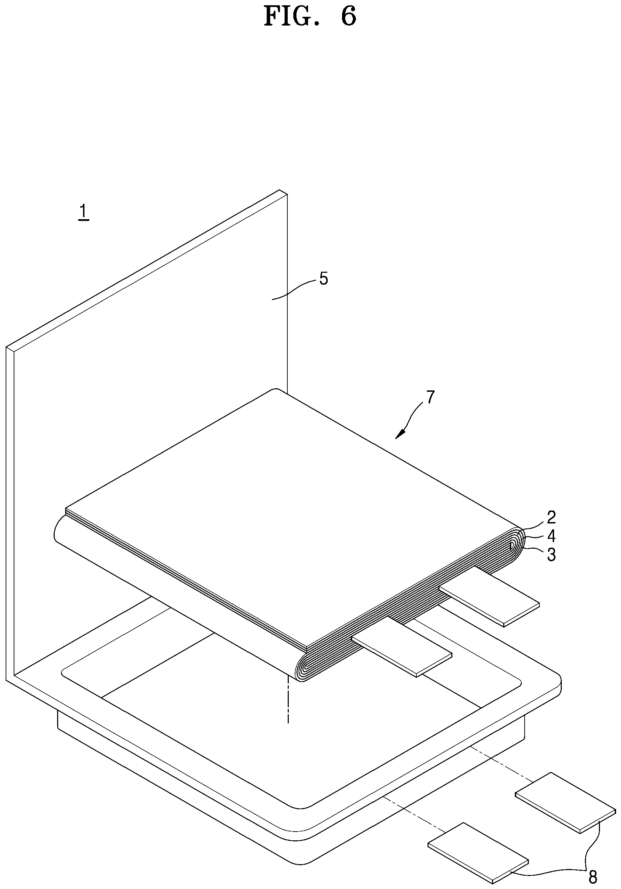

Referring to FIG. 6, a lithium metal battery 1 according to embodiments includes a cathode 3, an anode 2 as described previously, and a separator 4. The separator 4 may be located between the cathode 3 and the anode 2, and the cathode 3, the anode 2, and the separator 4 may be wound or folded to form a battery structure 7. The battery structure 7 is accommodated in a battery case 5. An electrode tab 8 acting as an electrical path for inducing the current formed in the battery structure 7 to the outside may be included. An organic liquid electrolyte is injected into the battery case 5 and sealed to complete the manufacture of the lithium battery 1. The battery case 5 may have a rectangular shape, but is not necessarily limited to such a shape, and may have, for example, a cylindrical shape, a thin film type or kind, and/or the like.

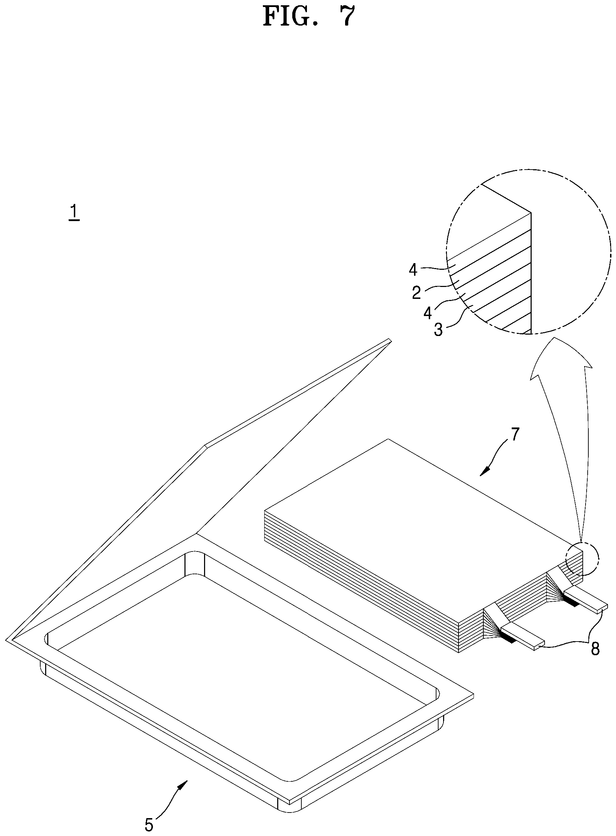

Referring to FIG. 7, the lithium metal battery 1 according to embodiments includes a cathode 3, an anode 2 as described previously, and a separator 4. The separator 4 may be located between the cathode 3 and the anode 2 to form a battery structure 7. The battery structure 7 is stacked in a bi-cell structure, and then accommodated in the battery case 5. An electrode tab 8 acting as an electrical path for inducing the current formed in the battery structure 7 to the outside may be included. An organic electrolyte is injected into the battery case 5 and sealed to complete the lithium metal battery 1. The battery case 5 may have a rectangular shape, but is not necessarily limited to such a shape, and may have, for example, a cylindrical shape, a thin film type or kind, and/or the like.

The pouch-type or kind lithium metal battery corresponds to the lithium metal battery of FIGS. 5 to 7 utilizing a pouch as a battery case. A pouch-type or kind lithium metal battery includes one or more battery structures. A separator is located between a cathode and an anode to form a battery structure. The battery structure is stacked in a bi-cell structure, then wet with an organic electrolyte, and then accommodated and sealed in a pouch to complete the pouch-type or kind lithium metal battery. For example, in some embodiments, the cathode, the anode as described previously, and the separator may be simply stacked and accommodated in the form of an electrode assembly in a pouch. In some embodiments, the cathode, the anode, and the separator may be wound or folded into an electrode assembly in the form of a jelly roll, and then, accommodated in the pouch. Then, an organic liquid electrolyte is injected into the pouch, which was then sealed to complete the manufacture of the lithium battery.

The lithium metal battery of the present disclosure has excellent or suitable discharge capacity and lifespan characteristics and has high energy density, and thus, may be utilized for, for example, electric vehicles (EV). For example, the lithium batteries are utilized for hybrid vehicles such as plug-in hybrid electric vehicles (PHEVs). The lithium batteries are also utilized in fields requiring large power storage. For example, the lithium batteries are utilized for electric bicycles, power tools, etc.

A plurality of lithium metal batteries are stacked to form a battery module, and a plurality of battery modules may form a battery pack. Such a battery pack may be utilized in any device requiring high capacity and high output. For example, the battery pack may be utilized for laptops, smartphones, electric vehicles, etc. The battery module may include, for example, a plurality of batteries and a frame for holding the same. The battery pack may include, for example, a plurality of battery modules and a bus bar connecting the same. The battery module and/or battery pack may further include a cooling device. A plurality of battery packs may be controlled or selected by a battery management system. The battery management system may include a battery pack and a battery control device connected to the battery pack.

The lithium metal battery including a solid electrolyte will be described in more detail herein.

### All-solid-state lithium metal battery

For example, the lithium metal battery may be an all-solid-state lithium metal battery including a solid electrolyte. In some embodiments, due to the inclusion of the anode described previously in an all-solid-state lithium metal battery, improved capacity and excellent or suitable lifespan characteristics may be provided at the same time.

An all-solid-state lithium metal battery is manufactured by, for example, the following example method, but is not necessarily limited to this method and is adjusted according to required conditions.

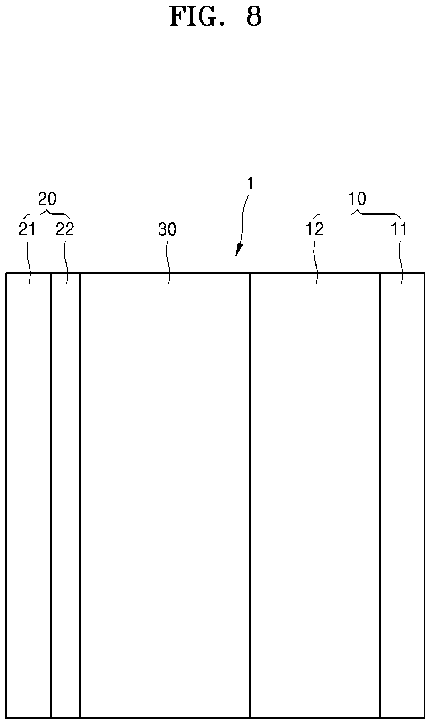

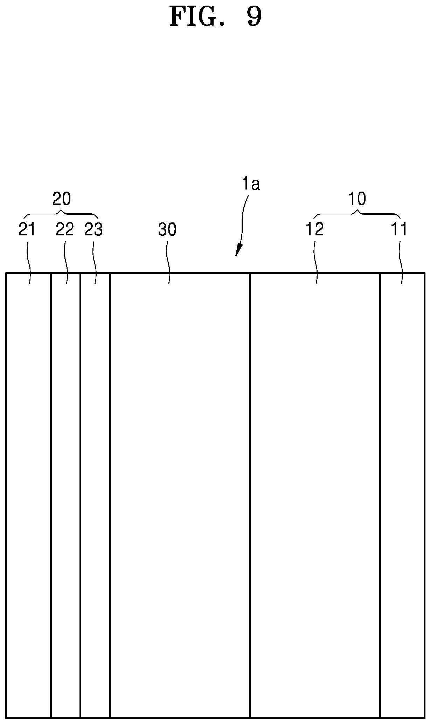

Referring to FIGS. 8 and 9, the all-solid-state lithium metal battery 1 includes a cathode 10, the anode 20 described previously, and a solid electrolyte layer 30 disposed between the cathode 10 and the anode 20. The solid electrolyte layer 30 includes, for example, an inorganic solid electrolyte. The solid electrolyte layer 30 may include, for example, a sulfide-based solid electrolyte or an oxide-based solid electrolyte.

### Anode

An anode including lithium metal or lithium alloy as described previously may be prepared.

### Cathode

Referring to FIGS. 8 and 9, the cathode 10 may include a cathode current collector 11 and a cathode active material layer 12 disposed on the cathode current collector. The cathode active material layer 12 may include a cathode active material. The cathode active material may be understood by referring to the description provided in connection with the lithium battery as described previously.

The cathode active material layer 12 may further include a solid electrolyte in addition to the cathode active material. The solid electrolyte included in the cathode 10 may be the same as or different from the solid electrolyte included in the solid electrolyte layer 30. The solid electrolyte included in the cathode 10 may be understood by referring to the description provided in connection with the solid electrolyte layer 30. The solid electrolyte utilized in the cathode active material layer 12 (in a form of particles) may have a smaller particle size (D50) than the solid electrolyte utilized in the solid electrolyte layer 30. For example, the D50 of the solid electrolyte utilized in the cathode active material layer 12 may be about 90% or less, about 80% or less, about 70% or less, about 60% or less, about 50% or less, about 40% or less, about 30% or less, or about 20% or less, of the D50 of the solid electrolyte utilized in the solid electrolyte layer 30. The D50 of the solid electrolyte utilized in the cathode active material layer 12 may be, for example, about 0.1 µm to about 2 µm, about 0.2 µm to about 1.5 µm, or about 0.3 µm to about 1.0 µm. The content (e.g., amount) of the solid electrolyte included in the cathode active material layer 12 may be about 1 wt% to about 15 wt%, about 5 wt% to about 15 wt%, or about 8.0 wt% to about 12.0 wt% of the total weight of the cathode active material layer 12.

The cathode active material layer 12 may include a binder. The binder may be, for example, styrene butadiene rubber (SBR), polytetrafluoroethylene, polyvinylidene fluoride, polyethylene, etc., but is not limited to these examples and any binder that can be utilized as a binder in the relevant technical field, may be applicable herein. The content (e.g., amount) of the binder included in the cathode active material layer 12 may be, for example, about 0.1 wt% to about 5 wt%, about 0.5 wt% to about 3 wt%, or about 1.0 wt% to about 2.0 wt% by weight of the total weight of the cathode active material layer 12.

The cathode active material layer 12 may include a conductive material. The conductive material may be, for example, a carbon-based conductive material or a metal-based conductive material. Conductive materials may include, for example, graphite, carbon black, acetylene black, Ketjen black, carbon fiber, carbon tube, metal powder, etc., but are not necessarily limited to these examples and any material that can be utilized as a conductive material in the relevant technical field may be applicable herein. The content (e.g., amount) of the conductive material included in the cathode active material layer 12 may be, for example, about 0.1 wt% to about 10 wt%, about 0.5 wt% to about 5 wt%, or about 1.0 wt% to about 4.0 wt% by weight of the total weight of the cathode active material layer 12. In addition to the cathode active material, the solid electrolyte, the binder, and the conductive material described previously, the cathode active material layer 12 may further include additives such as a filler, a coating agent, a dispersant, and an ion conductivity auxiliary agent.

The cathode current collector 11 may be, for example, a plate or foil consisting of aluminum (Al), indium (In), copper (Cu), magnesium (Mg), stainless steel, titanium (Ti), iron (Fe), cobalt (Co), nickel (Ni), zinc (Zn), germanium (Ge), lithium (Li) or an alloy thereof. The cathode current collector 11 may not be provided. The cathode current collector 11 may further include a carbon layer disposed on at least one side (e.g., one or two (e.g., opposite) sides) of the metal substrate. By additionally placing a carbon layer on the metal substrate, the metal of the metal substrate is prevented or reduced from being corroded by the solid electrolyte contained in the cathode layer and the interfacial resistance between the cathode active material layer 12 and the cathode current collector 11 may be reduced. The thickness of the carbon layer may be, for example, about 1 µm to about 5 µm, about 1 µm to about 4 µm, or about 1 µm to about 3 µm. If (e.g., when) the thickness of the carbon layer is too thin, it may be difficult to completely block or reduce contact between the metal substrate and the solid electrolyte. If (e.g., when) the thickness of the carbon layer is too thick, the energy density of the all-solid-state secondary battery may be decreased. The carbon layer may include amorphous carbon, crystalline carbon, etc. The thickness of the cathode current collector 11 including a metal substrate and optionally a carbon layer may be, for example, about 10 µm to about 50 µm, about 10 µm to about 40 µm, or about 10 µm to about 30 µm, but is not necessarily limited to these ranges, and may be selected depending on the characteristics of the all-solid-state lithium battery required.

In some embodiments, the cathode 10 may further include the cathode current collector 11, the cathode active material layer 12 disposed on the cathode current collector, and an inactive member disposed on at least one side of the cathode active material layer. The area of the cathode active material layer 12 may be smaller than the area of the solid electrolyte layer 30 being in contact with the cathode active material layer 12. The inactive member may be disposed around (e.g., surrounding) the side of the cathode active material layer 12 to correct an area error between the cathode active material layer 12 and the solid electrolyte layer 30. An inactive member is a member that does not contain an electrochemically active material, for example, an electrode active material. An electrode active material is a material that absorbs/releases lithium. An inactive member is a member including (e.g., consisting of) materials, utilized in the relevant technical field, other than electrode active materials. The inactive member surrounds the sides of the cathode active material layer 12 and may be in contact with the solid electrolyte layer 30. The inactive member may surround the side of the cathode active material layer 12 and is in contact with the solid electrolyte layer 30. Accordingly, the cracking of the solid electrolyte layer 30 caused by the pressure difference during the pressing process in the solid electrolyte layer 30 that is not in contact with the cathode active material layer 12, can be effectively suppressed or reduced. The area of the inactive member corrects the difference between the area of the cathode active material layer 12 and the area of the solid electrolyte layer 30, thereby effectively suppressing the cracking of the solid electrolyte layer 30 caused by the pressure difference during the pressing process. The inactive member may be placed between the cathode current collector 11 and the solid electrolyte layer 30 which face each other. The inactive member may act as a filler that fills the space between the cathode current collector 11 and the solid electrolyte layer 30 which face each other. The inactive member may include one or more selected from among lithium ion insulator and lithium ion conductor. The inactive member may be an electronic insulator. In other words, the inactive member may not be an electron conductor. The inactive member may be an organic material, an inorganic material, or an organic-inorganic composite material. The organic material may be, for example, a polymer. The inorganic material may be, for example, a ceramic, such as a metal oxide. Organic-inorganic composite materials may be complexes of polymers and metal oxides. The inactive member may include, for example, one or more selected from among an insulating polymer, an ion conductive polymer, an insulating inorganic material, an oxide-based solid electrolyte, and a sulfide-based solid electrolyte. The inactive member may be an olefin-based polymer such as polypropylene (PP) and polyethylene (PE). The inactive member may be, for example, a gasket. The thickness of the inactive member may be the same or similar to the thickness of the cathode active material layer 12.

### Solid electrolyte layer

Referring to FIGS. 8 and 9, the solid electrolyte layer 30 is disposed between the cathode 10 and the anode 20 and includes, for example, a sulfide-based solid electrolyte.

Sulfide-based solid electrolytes may include, for example, one or more selected from Li₂S-P₂S₅, Li₂S-P₂S₅-LiX where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers and Z is one of Ge, Zn, or Ga, Li₂S-GeS₂, Li₂S-SiS₂-Li₃PO₄, Li₂S-SiS₂-LiₚMO_{q} where p and q are positive numbers and M is one of P, Si, Ge, B, Al, Ga, and In, Li₇₋ₓPS₆₋ₓClₓ, 0≤x≤2, Li₇₋ₓPS₆₋ₓBrₓ where 0≤x≤2, and Li₇₋ₓPS₆₋ₓIₓ where 0≤x≤2. Sulfide-based solid electrolytes are manufactured by treating starting materials such as Li₂S, P₂S₅, etc. by melting quenching or mechanical milling. In some embodiments, after this treatment, heat treatment may be performed. The solid electrolyte may be amorphous, crystalline, or a mixture thereof. In some embodiments, the solid electrolyte may include, for example, at least sulfur (S), phosphorus (P), and lithium (Li) as constituent elements in the sulfide-based solid electrolyte materials described previously. In some embodiments, the solid electrolyte may be a material including Li₂S-P₂S₅. If (e.g., when) a sulfide-based solid electrolyte material that forms a solid electrolyte includes Li₂S-P₂S₅, the mixing molar ratio of Li₂S and P₂S₅, for example, is in the range of Li₂S:P₂S₅ = about 50:50 to about 90:10.

The sulfide-based solid electrolyte may include, for example, an argyrodite type or kind solid electrolyte represented by Formula 1:

**Formula 1** **Li⁺₁₂₋ₙ₋ₓAⁿ⁺X²⁻₆₋ₓY⁻ₓ**

where A is P, As, Ge, Ga, Sb, Si, Sn, Al, In, Ti, V, Nb, or Ta, X is S, Se, or Te, and Y is Cl, Br, I, F, CN, OCN, SCN, or N₃, 1≤n≤5, and 0≤x≤2. The sulfide-based solid electrolyte may be, for example, an argyrodite-type or kind (e.g., argyrodite) compound including one or more selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ where x satisfies the condition of 0≤x≤2. The sulfide-based solid electrolyte may be, for example, an argyrodite-type or kind (e.g., argyrodite) compound including one or more selected from Li₆PS₅Cl, Li₆PS₅Br, and LisPSsl. The density of the argyrodite-type or kind (e.g., argyrodite) solid electrolyte may be about 1.5 g/cc to about 2.0 g/cc. Argyrodite-type or kind (e.g., argyrodite) solid electrolyte has the density of about 1.5 g/cc or more, which reduces the internal resistance of the all-solid-state secondary battery and effectively suppresses the penetration of a solid electrolyte layer by Li.

The elastic modulus, that is, Young's modulus, of the sulfide-based solid electrolyte may be, for example, about 35 GPa or less, about 30 GPa or less, about 27 GPa or less, about 25 GPa or less, or about 23 GPa or less. The elastic modulus, that is, Young's modulus, of the sulfide-based solid electrolyte may be, for example, about 10 GPa to about 35 GPa, about 10 GPa to about 30 GPa, about 10 GPa to about 27 GPa, about 10 GPa to about 25 GPa, or about 10 GPa to about 23 GPa. As the sulfide-based solid electrolyte has an elastic modulus in this range, the temperature and/or pressure required for sintering is reduced, so that sintering of the solid electrolyte may be performed more easily.

The D50 of the solid electrolyte utilized in the solid electrolyte layer 30 may be, for example, about 1 µm to about 10 µm, about 1.5 µm to about 7 µm, or about 2 µm to about 5 µm.

The content (e.g., amount) of the sulfide-based solid electrolyte included in the solid electrolyte layer 30 may be, for example, about 97 wt% to about 100 wt%, about 98 wt% to about 99.9 wt%, or about 98.5 wt% to about 99.0 wt% of the total weight of the solid electrolyte layer 30.

The solid electrolyte layer 30 may further include, for example, a binder. The binder included in the solid electrolyte layer 30 may be, for example, styrene butadiene rubber (SBR), polytetrafluoroethylene, polyvinylidene fluoride, polyethylene, etc., but not limited thereto, and any binder utilized in the relevant technical field may be applicable herein. The binder of the solid electrolyte layer 30 may be the same as or different from the binder included in the cathode active material layer 12 and the anode active material layer 23.

The content (e.g., amount) of the binder included in the solid electrolyte layer 30 may be, for example, about 0.1 wt% to about 3 wt%, about 0.5 wt% to about 2 wt%, or about 1.0 wt% to about 2.0 wt% of the total weight of the solid electrolyte layer 30.

Referring to FIGS. 8 and 9, the all-solid-state lithium metal battery 1 includes a solid electrolyte layer 30, a cathode layer 10 disposed on at least one side of the solid electrolyte layer 30, and an anode layer 20 disposed on another side (e.g., an opposite side) of the solid electrolyte layer 30. The cathode layer 10 includes a cathode active material layer 12 in contact with the solid electrolyte layer 30 and a cathode current collector 11 in contact with the cathode active material layer 12, and the anode layer 20 includes an electrodeposition inducing layer 22 in contact with the solid electrolyte layer 30 and an anode current collector 21 in contact with the electrodeposition inducing layer 22. For example, the all-solid-state lithium metal battery 1 is completed such that the cathode active material layer 12 and the electrodeposition inducing layer 22 are respectively disposed on at least one side (e.g., one or both (e.g., opposite) sides) of the solid electrolyte layer 30, and the cathode current collector 11 and the anode current collector 21 are respectively disposed on the cathode active material layer 12 and the electrodeposition inducing layer 22. In some embodiments, the electrodeposition inducing layer 22, the solid electrolyte layer 30, the cathode active material layer 12, and the cathode current collector 11 are sequentially stacked on the anode current collector 21 to complete the manufacture of the all-solid-state lithium metal battery 1.

The overpotential during initial charging of a lithium metal battery may be smaller than the overpotential during initial charging of a lithium metal battery that does not include an electrodeposition inducing layer. The overpotential during initial charging of a lithium metal battery may be less than about 0.01 V. The very low overpotential during initial charging of lithium metal batteries can attribute to the substantially uniform electrodeposition of lithium metal by the electrodeposition inducing layer, which inhibits the formation of lithium dendrite. Therefore, the charging characteristics and cycle characteristics of a lithium metal battery with an electrodeposition inducing layer can be greatly improved.

### Method of manufacturing lithium metal battery

A method of manufacturing a lithium metal battery, according to embodiments, includes applying or providing an anode current collector and applying or providing an electrodeposition inducing layer on the anode current collector to provide an anode, applying or providing a cathode on the anode, and applying or providing an electrolyte layer between the anode and the cathode, wherein the electrodeposition inducing layer may include chromium (Cr).

First, an anode current collector is provided or applied. The anode current collector may be understood by referring to the description provided or applied in connection with the anode described previously. For example, copper foil is provided or applied as an anode current collector. Next, an electrodeposition inducing layer may be provided or applied on the anode current collector to provide an anode.

The electrodeposition inducing layer may be provided or applied by, for example, applying or providing chromium (Cr) on the anode current collector. For example, chromium (Cr) may be applied and/or dried on the anode current collector to provide the chromium (Cr). The applying or providing an electrodeposition inducing layer may include, for example, applying or providing composite particles, which are copper particles coated with chromium (Cr), on the anode current collector. The applying or providing the electrodeposition inducing layer may include, for example, applying or providing the composite particles by a roll press method or a spray method.

The applying or providing the electrodeposition inducing layer may include treating the anode current collector with a chromate solution. The applying or providing an electrodeposition inducing layer includes, for example, preparing a chromate solution or a dichromate solution by mixing chromate, dichromate, chromic acid, a chromate salt compound, or a combination thereof with a solvent, and then treating the anode current collector with the chromate solution or the dichromate solution. The applying or providing an electrodeposition inducing layer may include, for example, contacting the chromate solution or the dichromate solution with the anode current collector. For example, after the chromate solution mixture is prepared, the mixture is brought into contact, applied, and dried on the anode current collector to provide the electrodeposition inducing layer. The mixture may include, for example, chromate and a solvent. The mixture may include, for example, chromate, dichromate, and a solvent.

The solvent may be water, an organic solvent, or a combination thereof. The solvent may be, for example, water or NMP, but is not necessarily limited to these, and any solvent utilized in the relevant technical field may be utilized.

The coating method may be, for example, a doctor blade method, a roll press method, an electroplating method, or a spray method.

Through the following Examples and Comparative Examples, the present disclosure will be explained in more detail. However, these examples are intended to illustrate the present disclosure, and the scope of the present creative concept is not limited thereto.

### Example 1: Cu substrate/chromium (Cr)-containing electrodeposition inducing layer anode

### Anode manufacturing

The anode was formed to have a structure in which a copper current collector having the thickness of about 10 µm was coated with a chromate electrodeposition inducing layer having the thickness of about 1 µm.

### Cathode manufacturing

LiCoO₂ powder and carbon ceramic material (Super-P; Timcal Ltd.) were uniformly mixed in a weight ratio of about 90:5, and a polyvinylidene fluoride (PVDF) binder solution was added thereto to prepare cathode active material slurry with a weight ratio of active material: carbon-based ceramic material: binder= about 90:5:5.

The prepared slurry was applied onto an aluminum substrate having the thickness of about 15 µm utilizing a doctor blade, dried under reduced pressure at about 120°C, and then rolled with a roll press to form a cathode in the form of a sheet.

### Manufacture of coin cells

A coin cell was manufactured by placing a polypropylene separator (ES1608) between the cathode and the anode prepared above and injecting an electrolyte.

As an electrolyte, a solution of about 0.6 M lithium difluoro(oxalate)borate (LiDFOB) and about 0.6 M lithium tetrafluoroboate (LiBF₄) dissolved in a mixture including fluoroethylene carbonate (FEC) and diethyl carbonate (DEC) (about 1:2 volume ratio) was utilized.

### Example 2: Cu substrate/chromium (Cr)-containing electrodeposition inducing layer anode

An anode and a coin cell were manufactured in substantially the same manner as in Example 1, except that the anode was manufactured to have a structure in which a copper current collector having the thickness of about 10 µm was coated with an electrodeposition inducing layer having the thickness of about 4 µm.

### Comparative Example 1: Cu substrate anode

An anode and a coin cell were manufactured in substantially the same manner as in Example 1, except that the electrodeposition inducing layer was not included.

### Comparative Example 2: Cu substrate/tin-containing electrodeposition inducing layer anode

An anode and a coin cell were manufactured in substantially the same manner as in Example 1, except that a copper current collector coated with an about 1 µm-thick electrodeposition inducing layer including tin (Sn) was utilized.

### Comparative Example 3: Cu substrate/aluminum-containing electrodeposition inducing layer anode

An anode and a coin cell were manufactured in substantially the same manner as in Example 1, except that an aluminum (Al) foil was prepared and the aluminum foil was roll-pressed on a copper current collector, thereby preparing an anode including an electrodeposition inducing layer having the thickness of about 2 µm.

### Evaluation Example 1: 1^{st} charging curve evaluation

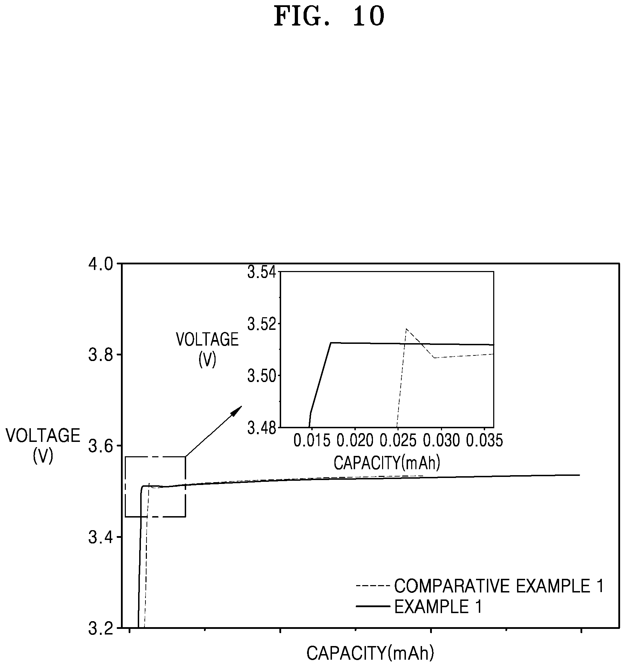

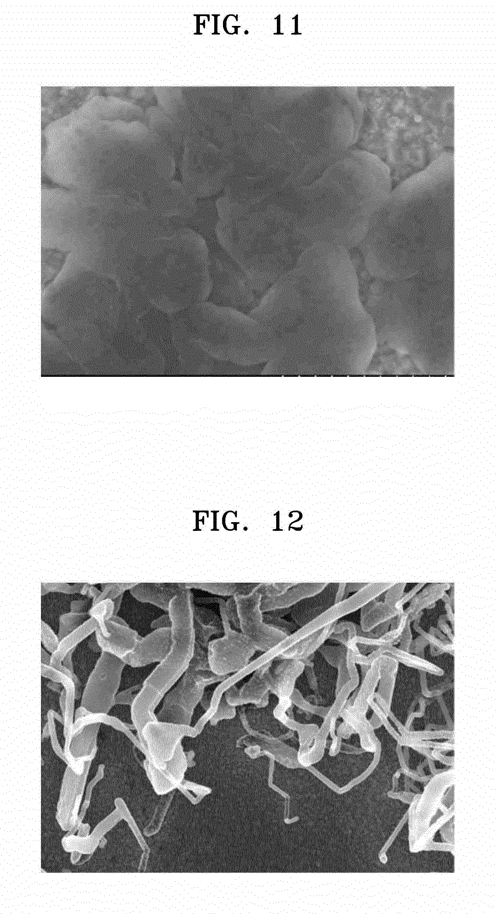

The lithium batteries prepared in Example 1 and Comparative Example 1 were charged at a constant current of about 0.1 C rate at about 25°C until the voltage reached about 4.3 V (vs. Li), and then cut-offed at the current of about 0.05 C rate while maintaining about 4.2 V in a constant voltage mode. The charging curve is shown in FIG. 10, and the cross section of the anode after the 1^{st} charge is shown in FIGS. 11 and 12.

As shown in FIG. 10, it was confirmed that the overpotential of the lithium battery of Example 1 was reduced compared to the lithium battery of Comparative Example 1.

This reduction in overpotential may be due to the electrodeposition inducing layer including chromium (Cr) which suppressed or reduced the formation of lithium dendrites and induced substantially uniform electrodeposition of lithium, as shown in FIGS. 11 and 12. In Example 1, substantially uniform and wide lithium electrodeposition was confirmed after the 1^{st} charge, but in Comparative Example 1, it was confirmed that lithium dendrites were formed after the ^{1st} charge.

### Evaluation Example 2: Charge/discharge test

Each of the lithium batteries manufactured in Examples 1 to 3 and Comparative Examples 1 to 3 was charged with a constant current of about 0.1 C rate at about 25 °C until a voltage reached about 4.3 V (vs. Li), and was then cut-off at a current of about 0.05 C rate while maintaining the voltage at about 4.3 V in a constant voltage mode. Subsequently, the lithium battery was discharged at a constant current of about 0.1 C rate until the voltage reached about 2.8 V (vs. Li) (formation cycle).

This cycle was repeated under the same conditions until the 180^{th} cycle. However, Comparative Example 3 was repeated under the same conditions up to the 120^{th} cycle.

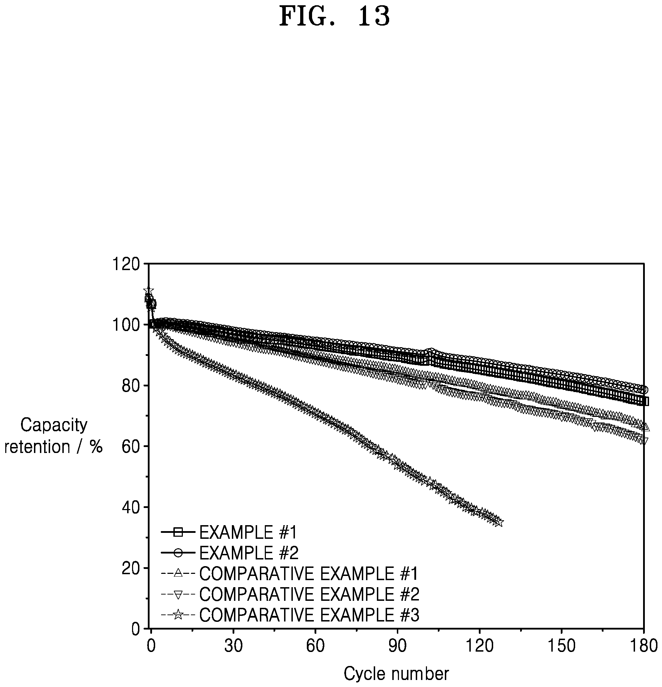

In all charge/discharge cycles, a 10-minute stop time was provided after every charge/discharge cycle. Some of the results of the room temperature charge and discharge experiment are shown in Table 1 and FIG. 13. The capacity retention ratio is defined by Equation 1. Equation 1 Capacity retention ratio [%] = [discharge capacity in 180th cycle/discharge capacity in 1st cycle] × 100

**Table 1**

| | Composition of electrodeposition inducing layer | Thickness of electrodeposition inducing layer (µm) | Capacity retention ratio [%] (180^{th} cycle) |
|---|---|---|---|
| Example 1 | Chromium hydroxide | 1 | 74 |
| Example 2 | Chromium hydroxide | 4 | 78 |
| Comparative Example 1 | - | - | 66 |
| Comparative Example 2 | tin | 1 | 62 |
| Comparative Example 3 | Aluminum | 2 | 38 (120^{th} cycle) |

As shown in Table 1 and FIG. 13, the capacity retention ratio of each of the lithium batteries of Examples 1 and 2 was improved compared to the lithium batteries of Comparative Examples 1 to 3.

The improved capacity retention ratio may be due to the electrodeposition inducing layer including chromium (Cr) which suppressed or reduced the formation of lithium dendrites and induced substantially uniform electrodeposition of lithium.

The lithium battery of Comparative Example 1, which did not include an electrodeposition inducing layer, showed poor lifespan characteristics.

The lithium batteries of Comparative Examples 2 and 3 showed poor lifespan characteristics. This result seems to occur due to the fact that regarding the lithium cells of Examples 2 and 3, the electrodeposition inducing layer without Cr did not inhibit the formation of lithium dendrite and did not induce substantially uniform electrodeposition of lithium.

Example embodiments have been described in more detail with reference to the accompanying drawings, but the present disclosure is not limited to these examples. It is obvious that a person with ordinary knowledge in the technical field, to which this present disclosure belongs, can derive one or more suitable examples of changes or modifications within the scope of the technical idea described in the claims, and these are within the technical scope of this present disclosure.

According to one aspect, a lithium metal battery with improved overpotential characteristics and cycle characteristics can be provided by utilizing an electrodeposition inducing layer with a new structure.

In present disclosure, "not include (not including) a or any 'component'", "exclude (excluding) a or any 'component'", "'component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the relevant technical field that one or more suitable changes in form and details may be made therein without departing from the spirit and scope of the present disclosure as defined by the following claims and equivalents thereof.

## Claims

1. A lithium metal battery (1) comprising:
a cathode (10);
an anode (20); and
an electrolyte layer (30) between the cathode (10) and the anode (20), wherein the anode (20) comprises:
an anode current collector (21); and
an electrodeposition inducing layer (22) on the anode current collector (21), whereby
the electrodeposition inducing layer (22) comprises chromium (Cr).

2. The lithium metal battery (1) as claimed in claim 1, wherein the electrodeposition inducing layer (22) comprises chromium hydroxide, chromium oxide or a combination thereof, and wherein:
the electrodeposition inducing layer (22) is derived from chromate, dichromate, or a combination thereof; or
the electrodeposition inducing layer (22) comprises composite particles, the composite particles each have a core and a shell on the core, the core comprises a same metal as the anode current collector (21), and the shell comprises Cr.

3. The lithium metal battery (1) as claimed in claim 2, wherein the electrodeposition inducing layer (22) comprises the composite particles, and
wherein the composite particles each have a particle size of about 0.5 µm to about 10 µm.

4. The lithium metal battery (1) as claimed in any of the claims 1 to 3, wherein the electrodeposition inducing layer (22) comprises Cr(OH)₃, Cr₂O₃, CrOs, or a combination thereof, and
a content of the Cr is about 1 wt% to about 10 wt% of the total weight of the electrodeposition inducing layer (22).

5. The lithium metal battery (1) as claimed in any of the claims 1 to 4, wherein
- a thickness ratio of the electrodeposition inducing layer (22) to the anode current collector (21) is about 0.01 to about 0.45; and/or -
- a Cr adhesion content of the electrodeposition inducing layer (22) is about 1.0 mg/m² to about 100 mg/m²; and/or
- the electrodeposition inducing layer (22) has a thickness of about 0.01 µm to about 5 µm.

6. The lithium metal battery (1) as claimed in any of the claims 1 to 5,
wherein the electrodeposition inducing layer (22) is free of polymers.

7. The lithium metal battery (1) as claimed in any of the claims 1 to 6, wherein an overpotential of the lithium metal battery (1) during initial charging is smaller than an overpotential of an electrodeposition inducing layer-free lithium metal battery during initial charging, and
the overpotential of the lithium metal battery (1) during initial charging is about 0.01 V or less.

8. The lithium metal battery (1) as claimed in any of the claims 1 to 7, wherein the anode current collector (21) comprises copper (Cu), nickel (Ni), stainless steel (SUS), iron (Fe), cobalt (Co), tantalum (Ta), tungsten (W), or a combination thereof.

9. The lithium metal battery (1) as claimed in any of the claims 1 to 8, further comprising an anode active material layer (23) between the electrolyte layer (30) and the anode (20), preferably with a thickness of about 0.1 µm to about 100 µm, wherein:
the anode active material layer (23) is a metal layer, and the metal layer comprises a lithium metal or a lithium alloy; or
the anode active material layer (23) comprises lithium foil, lithium powder, plated lithium, a lithium alloy, a lithium-containing organic compound, or a combination thereof,
wherein preferably the anode active material layer (23) comprises plate-shaped non-fibrous lithium or plate-shaped non-acicular lithium

10. The lithium metal battery (1) as claimed in any of the claims 1 to 9, further comprising: a protective layer between the anode (20) and the electrolyte layer (30); and
an anode active material layer (23) between the protective layer and the anode (20).

11. The lithium metal battery (1) as claimed in any of the claims 1 to 10, wherein an electrolyte in the electrolyte layer (30) is a liquid electrolyte, a solid electrolyte, a gel electrolyte, or a combination thereof, and
wherein the solid electrolyte comprises an oxide-based solid electrolyte, a sulfide-based solid electrolyte, a polymer solid electrolyte, or a combination thereof, and
the gel electrolyte comprises a polymer gel electrolyte.

12. The lithium metal battery (1) as claimed in any of the claims 1 to 11, wherein the cathode (10) comprises a cathode current collector (11), and the anode (20) comprises an anode current collector (21), and
wherein
at least one of the cathode current collector (11) or the anode current collector (21) comprises a base film and a metal layer on at least one side of the base film,
the base film comprises a polymer, and the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

13. A method of manufacturing a lithium metal battery (1), the method comprising:
providing an anode current collector (21);
providing an electrodeposition inducing layer (22) on the anode current collector (21) to provide an anode (20); and
providing a cathode (10) on the anode (20) and providing an electrolyte layer (30) between the anode (20) and the cathode (10), wherein
the electrodeposition inducing layer (22) comprises chromium (Cr).

14. The method as claimed in claim 13, wherein the providing of the electrodeposition inducing layer (22) comprises providing Cr on the anode current collector (21) and/or treating the anode current collector (21) with a chromate solution; whereby
the providing of Cr comprises providing Cr-coated copper particles on the anode current collector (21), and
the providing of the Cr-coated copper particles on the anode current collector (21) is performed through a roll press method or a spray method.

15. The method as claimed in claim 13 or 14, wherein the treating of the anode current collector (21) with the chromate solution comprises:
preparing a chromate solution by mixing chromate, dichromate, chromic acid, a chromate salt compound, or a combination thereof, with a solvent; and
contacting the chromate solution with the anode current collector (21), and
wherein the solvent comprises water, an organic solvent, or a combination thereof.
